(19) Europäisches Patentamt
European Patent Office
Office européen des brevets

(11) **EP 3 877 113 B1**

(12) **EUROPEAN PATENT SPECIFICATION**

(45) Date of publication and mention
of the grant of the patent:
**07.08.2024 Bulletin 2024/32**

(21) Application number: **19816881.7**

(22) Date of filing: **08.11.2019**

(51) International Patent Classification (IPC):
**B23K 37/04** (2006.01)     **C22C 9/00** (2006.01)
**B23K 9/10** (2006.01)      **B23K 11/26** (2006.01)
**B23K 11/04** (2006.01)     **B23K 101/16** (2006.01)

(52) Cooperative Patent Classification (CPC):
**B23K 37/0435; B23K 9/1081; B23K 11/046;
B23K 11/26; C22C 9/00;** B23K 2101/16

(86) International application number:
**PCT/IB2019/059600**

(87) International publication number:
**WO 2020/095255 (14.05.2020 Gazette 2020/20)**

(54) **APPARATUS FOR WELDING METAL PRODUCTS**

VORRICHTUNG ZUM SCHWEISSEN VON METALLPRODUKTEN

APPAREIL DE SOUDAGE DE PRODUITS MÉTALLIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2018 IT 201800010190**

(43) Date of publication of application:
**15.09.2021 Bulletin 2021/37**

(73) Proprietor: **Danieli & C. Officine Meccaniche S.p.A.
33042 Buttrio (IT)**

(72) Inventors:
• **BORDIGNON, Giuseppe
33050 Bicinicco (IT)**

• **ZILLI, Davide
33030 Bressa di Campoformido (IT)**
• **RUSSIAN, Daniele
33030 Gemona del Fiuli (IT)**

(74) Representative: **Celona, Antonio et al
Notarbartolo & Gervasi S.p.A.
Viale Achille Papa, 30
20149 Milano (IT)**

(56) References cited:
**CN-A- 102 899 518      FR-A1- 2 706 488
US-A- 2 142 671      US-A1- 2001 017 290**

## Description

Field of the invention

The present invention relates to the field of welding metal products, in particular semi-finished metal products such as for example billets, bars or blooms.

The invention in particular relates to the components which serve to grip the metal products during the welding operation.

Background art

In rolling plants, in particular in the endless-operation type, the metal products coming from the casting machine or from external warehouses are welded to one another to then be rolled.

The metal products which are welded are typically semi-finished metal products such as e.g. billets, bars or blooms.

The welding is carried out by joining the tail of one product with the head of the successive product to each other.

The welding is obtained by means of an electrical discharge generated by means of electrical power supplies which feed the products to be welded.

The products are to be effectively blocked during the welding. There are provided blocking and retaining means for this purpose, for example clamps which serve to hold the products in position during the welding and to transmit the electric current to the products to be welded.

Such blocking means typically comprise elements, in particular pads, which come into direct contact with the products to be welded.

Nowadays, materials having high electrical conductivity are used to make pads because it is believed that these materials allow reducing the welding time, in particular because it is believed they allow a quicker passage of electric current. High electrical conductivity metal materials generally are costly and wear quickly. The pads typically are replaceable because they inevitably are subject to wear. The wear of the pads is induced both by the contact with the metal product to be welded and by the passage of the electric current used for welding, which in particular induces an overheating of the pad.

US2001017290A1 discloses welding device for butt welding of metal products produced by continuous casting that comprises jaws for gripping bars and separated electric power supplies which are set in contact with the surfaces of the two bars, for carrying out a butt welding operation. The electric power supplies are provided with respective positioning and actuating means, controlled by an actuation device which actuates them independently from one another during setting in contact and detachment of the bars.

US2142671 discloses copper alloy containing Beryllium with improved hardness characteristics in a broad range of 0,01 to 2%.

The pad typically reaches the end of its life when the thickness thereof is reduced by about 20%, passing, for example, from an initial thickness of 35 mm to a thickness of about 27 mm due to wear.

Disadvantageously, the wear of the pad does not occur in a uniform manner on the surface of the pad. The surface non-uniformity of the pad causes a worse blocking of the product to be welded. Thus, the risk of misalignment between the welded products increases, which results in serious rolling problems.

The pads currently used are to be replaced at most every 20,000 welding operations.

Disadvantageously, the replacement of the pads requires interrupting the production for lengthy periods. Generally, about 4 hours are needed to replace the pads. Indeed, the operators must carry out complex operations in areas which are difficult to access.

A production interruption is required on average every two weeks for a plant with a productivity from 70 ton/h to 120 ton/h, while a production interruption is required on average once a week for plants with a productivity of 180 ton/h.

The operating life of the pads currently used therefore is not satisfactory.

Summary of the invention

It is an object of the present invention to make an electrical discharge welding apparatus for welding metal products comprising at least one gripping member provided with at least one pad which is more resistant to wear, and therefore has an increased operating life, with respect to the known pads.

It is another object of the present invention to make a pad which is more affordable with respect to the known art.

It is another object of the present invention to provide a welding apparatus provided with an optimized cooling system for pad and gripping member.

The present invention achieves at least one of such objects, and other objects which will be apparent in light of the present description, by means of an electrical discharge welding apparatus for welding metal products in accordance with claim 1. Another aspect of the invention relates to a plant comprising the aforesaid welding apparatus and a rolling apparatus.

Advantageously, it has been noted that the pads made according to the invention are more resistant to wear with respect to the state of the art. Therefore, production can be interrupted less frequently and increased productivity is obtained overall.

In certain cases, for example when the hardness of the pad material is about 40 HRC and the electrical conductivity thereof is about 22% IACS, the pads can be used for about 100,000 welding operations, i.e. about five times more with respect to the state of the art.

Following a test campaign, it was noted that the passage of most of the electric current occurs within a given distance from the edge of the pad proximal to the welding seam, i.e. within a given distance from the edge proximal to the end of the metal product where the welding is performed.

The results obtained have resulted in a different assessment of the incidence of the electrical conductivity of the pad material over the welding time, with respect to the prior art.

It has in particular been noted that there is no need to use materials with increased electrical conductivity to reduce the welding time and that an increased hardness of the material corresponds to an increased operating life of the pads.

In some particular embodiments, the pad cooling system was carefully arranged according to an optimized spatial distribution in consideration of the aforesaid observations on the distribution of the passage of the electric current.

According to an advantageous aspect, the distribution of the cooling system allows the formation of defects on the casting product to be reduced, e.g. the "black spots", a known problem in the field. Moreover, the distribution of the cooling system allows the properties of the pad material to be best exploited and synergistically contributes to prolonging of the operating life thereof.

Further features and advantages of the invention will be more apparent in light of the detailed description of non-limiting embodiments.

The dependent claims describe particular embodiments of the invention.

Brief description of the drawings

Reference is made in the description of the invention to accompanying drawings, which are provided by way of a non-limiting example, in which:

Fig. 1 shows a perspective view of a component of a welding apparatus according to the invention;
Fig. 2 shows another perspective view of the component in Fig. 1;
Fig. 3 shows a side view of the component in Fig. 1, with some parts, visible in transparency, drawn with a dotted line;
Fig. 4 shows the section C-C of Fig. 3;
Fig. 5 shows a side view of some components of a welding apparatus according to the invention, with some transparent parts drawn with a dotted line, and a section of a semi-finished metal product;
Fig. 6 diagrammatically shows a side view of a welding apparatus according to the invention.

The equal elements, or the equivalent or substantially equivalent elements, are indicated with the same numeral.

Description of embodiments of the invention

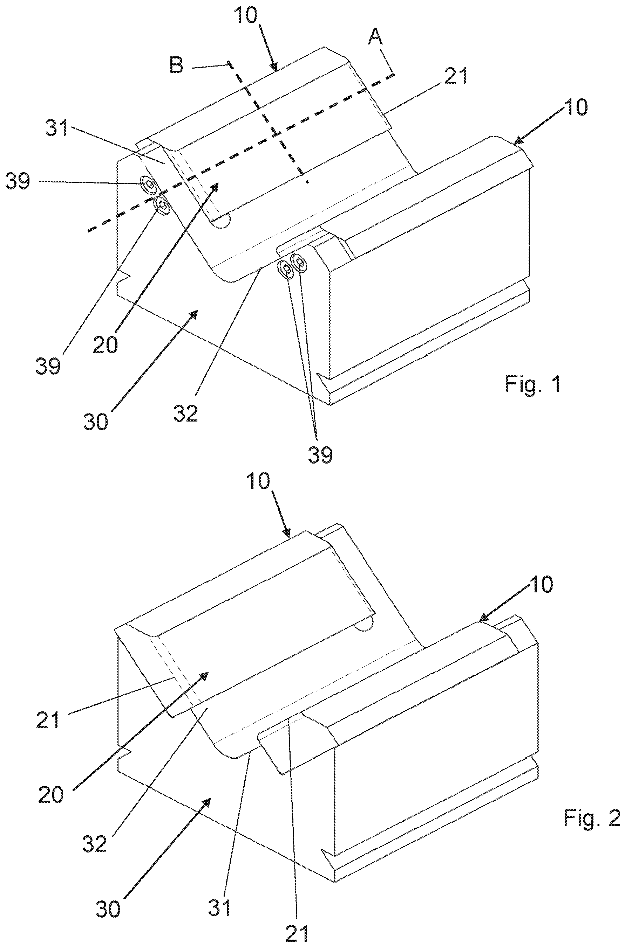

With reference to Figures 1 to 3, there is disclosed a gripping device or gripping member 30 of a welding apparatus of metal products, in particular of semi-finished metal products, the gripping member being provided with at least one pad 10, preferably two pads. The metal products can come directly from a casting apparatus or can come from a warehouse.

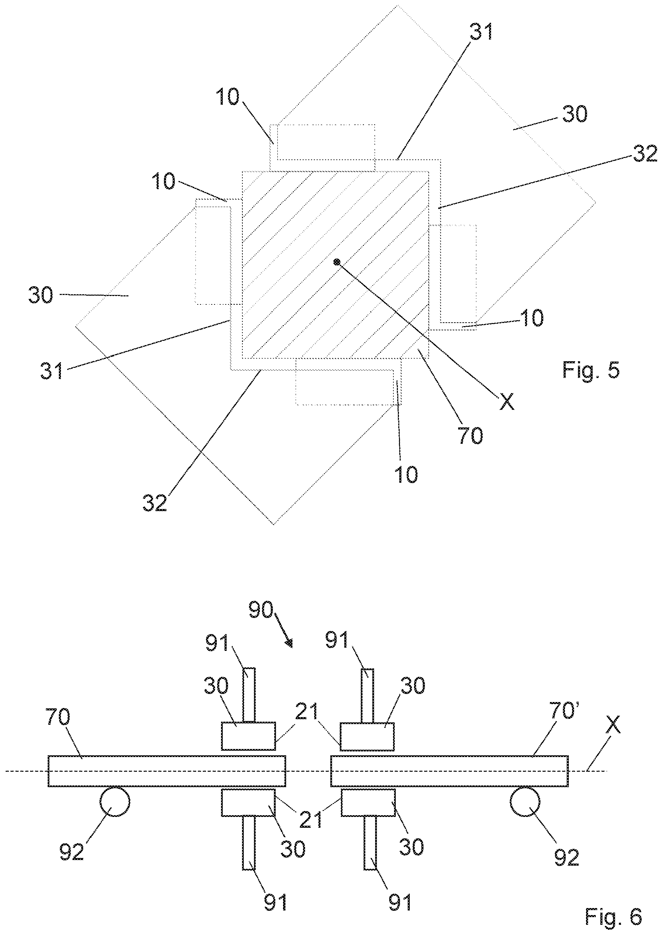

The pad, or slider or shoe, 10 in particular is a gripping pad. The pad 10 is adapted to come into contact - in particular, directly into contact - with a metal product 70 (Figures 5 and 6). The metal product 70 is for example, a billet, bar, bloom or another semi-finished metal product, and defines a longitudinal axis X. Preferably, but not exclusively, the metal products 70 have a square or substantially square section. Preferably, but not exclusively, the metal products 70 are made of steel.

Figures 1, 2 and 3 show a gripping member 30 provided with two pads 10. The two pads (indicated with the same numeral) preferably are identical to each other. In any case, reference is made indifferently to any of the pads 10 when reference is made to "a pad" or to "the pad".

Further details of the gripping member 30 are described later.

The pad 10 is made of a metal material having an electrical conductivity lower than or equal to 40% IACS, and a hardness greater than or equal to 20 HRC, preferably greater than or equal to 30 HRC. Said metal material is a copper alloy comprising a percentage by weight of beryllium from 1.6 to 2.0.

In particular, it is preferable for the electrical conductivity to be from 10 to 40% IACS and for the hardness to be from 20 to 60 HRC, preferably from 30 to 55 HRC.

For example, the electrical conductivity can be from 15 to 30% IACS and the hardness can be from 30 to 50 HRC, or the electrical conductivity can be from 20 to 24% IACS and the hardness can be from 35 to 45 HRC, preferably from 38 to 42 HRC.

In a particular example, the electrical conductivity is equal to or about equal to 22% IACS and the hardness is equal to or about equal to 40 HRC, i.e. equal to or about equal to 370 HB.

The aforesaid ranges, as the other ranges in this description, preferably comprise the limit values.

It is worth noting that the electrical conductivity is expressed according to the International Annealed Copper Standard. The values indicated can be easily converted into another unit of measurement, e.g. Siemens/meter (S/m).

In particular, the relationship between the electrical conductivity expressed in %IACS ($\sigma_{\%IACS}$) and the electrical conductivity expressed in S/m ($\sigma_{s/m}$) is the following:

$$\sigma_{\%IACS} = \frac{\sigma_{S/m}}{58 \cdot 10^6 S/m} \cdot 100$$

Whereby, for example, 22% IACS corresponds to 12.76· 10⁶ S/m.

It is also worth noting that the hardness is expressed according to the Rockwell C scale (HRC) and/or according to the Brinell scale (HB).

The metal material, with which the pad 10 is made, is a copper alloy comprising a percentage by weight of beryllium from 1.6 to 2.0, for example from 1.8 to 2.0, or for example equal to or about equal to 1.9.

The copper alloy preferably comprises a percentage by weight of cobalt from 0 to 0.3, for example from 0.2 to 0.3.

The copper alloy preferably comprises a percentage by weight of nickel from 0 to 0.3, and preferably the sum of the percentage by weight of cobalt and nickel is from 0.2 to 0.5.

Optionally, in all embodiments there can be other elements, e.g. impurities. When there are also other elements, preferably said other elements are in a percentage by weight of at most 0.1, or at most 0.5 or at most 1.0. For example, there can be a percentage by weight of iron of at most 0.1 and/or a percentage by weight of silicon of at most 0.1 and/or a percentage by weight of other impurities of at most 0.5 or at most 1.0.

In a first particular example, the composition of the copper alloy comprises, and preferably consists of, a percentage by weight of beryllium from 1.6 to 2.0; a percentage by weight of cobalt from 0.2 to 0.3, and the remaining part is copper and inevitable impurities. In this first example, the pad 10 has an electrical conductivity from 20 to 24% IACS, in particular equal to or about equal to 22%, and a hardness from 38 to 42 HRC, in particular equal to or about equal to 40 HRC, i.e. equal to or about equal to 370 HB.

In a second particular example, the composition of the copper alloy comprises, and preferably consists of, a percentage by weight of beryllium from 1.8 to 2.0; a percentage by weight of cobalt from 0 to 0.3, preferably from 0.1 to 0.3; a percentage by weight of nickel from 0 to 0.3, preferably from 0.1 to 0.3; and the remaining part is copper and inevitable impurities; wherein the sum of the percentage by weight of cobalt and the percentage by weight of nickel preferably is from 0.2 to 0.5. In this second example, the copper alloy preferably is heat treated, in particular hardened by precipitation hardening.

For example, a heat treatment at 760-800 °C is provided for a period equal to or about equal to 30 minutes, followed by a cooling, in particular a quenching in water, and by a tempering at 310-340 °C for 2 to 5 h, and successive air cooling.

In this second example, when the copper alloy in particular is heat treated, the pad 10 has an electrical conductivity of at least 27.6% IACS, for example equal to or about equal to 27.6% IACS, and a hardness of at least 350 HB, for example equal to or about equal to 350 HB.

In a third example, the composition of the copper alloy comprises, and preferably consists of, a percentage by weight of beryllium equal to or about equal to 1.9; cobalt and nickel in such quantities whereby the sum of the percentage by weight of cobalt and the percentage by weight of nickel is from 0.2 to 0.5, for example equal to or about equal to 0.25; a percentage by weight of impurities of at most 0.5; and the remaining part being copper. For example, the composition of the copper alloy can comprise or consists of: a percentage by weight of beryllium equal to or about equal to 1.9; a percentage by weight of nickel equal to or about equal to 0.25; a percentage by weight of cobalt equal to or about equal to 0.25; and the remaining part being copper and inevitable impurities.

In this third example, the pad 10 has an electrical conductivity equal to or about equal to 22% IACS, and a hardness equal to or about equal to 380 HB, in particular HBW 10/3000.

In general, as already mentioned, the pad 10 is adapted to come into contact with a metal product 70. In greater detail, pad 10 comprises a surface 20 (Figures 1, 2, and 3) adapted to come into contact with the metal product 70. Each surface 20 of each pad 10 defines two mutually orthogonal axes A, B, depicted only for one of the two pads 10. For each pad 10 the respective axis A is parallel or substantially parallel to the longitudinal axis X of the metal product 70 when the latter is in contact with the surface 20. Preferably, the surface 20 is a flat or substantially flat surface. The extension of the surface 20 parallel to axis A preferably is greater than the extension of the surface 20 parallel to axis B. By mere way of non-limiting example, the surface 20 substantially is rectangular.

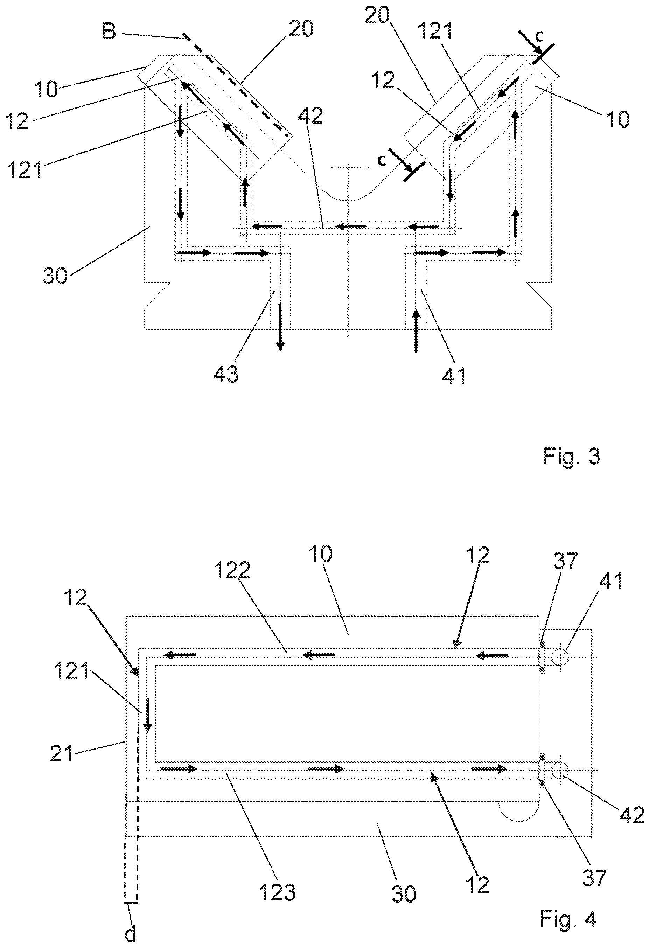

Preferably, in general, the pad 10 is provided with at least one channel 12 or conduit (Figures 3 and 4) for the passage of a cooling fluid, which for example is water. The channel 12 is made inside the pad 10. The channel 12, for example, can be formed by one or more holes made in the body of the pad 10. Part of such holes, for example an initial part, can conveniently be obstructed.

Channel 12 preferably comprises at least one stretch 121 which preferably extends parallel or substantially parallel to the aforesaid axis B. In other words, it is preferable for the stretch 121 of the channel 12 to define an axis which is perpendicular or substantially perpendicular to the longitudinal axis X of the metal product 70, when the metal product 70 is in contact with the pad 10.

Preferably, the minimum distance "d" (Fig. 4) between the stretch 121 of the channel 12 and an edge 21, in particular an outer or peripheral edge, of the pad 10 is from 4 to 10 mm. Such an edge 21 preferably is the edge which is proximal to the end of the corresponding metal product on which the welding is carried out.

The stretch 121 preferably is parallel or substantially parallel to the aforesaid edge 21.

The channel 12 preferably also comprises two further stretches 122, 123. The stretches 122, 123 preferably are parallel and spaced apart from each other, and preferably are perpendicular to the first stretch 121. In other words, it is preferable for the stretches 122, 123 to be parallel or substantially parallel to the aforesaid axis A.

An example of path of the cooling fluid inside the pad 10 is indicated by the arrows in Fig. 4. The cooling fluid in particular enters the stretch 122, crosses said stretch 122 and is introduced into the stretch 121. Once the cooling fluid has crossed stretch 121, said cooling fluid is introduced into the stretch 123 and leaves the channel. As mentioned above, Fig. 1 shows a gripping member 30 or grasping member, e.g. a jaw, provided with two pads 10. The gripping member 30 is made of electrically conductive material, e.g. of metal. The gripping member 30 comprises a body which has a substantially V-shaped recess, when looked at from the side (Fig. 3), preferably with the vertex of the V rounded. In other words, the gripping member 30 comprises two mutually inclined walls 31, 32 so as to define a seat for the metal product 70. Fig. 5 shows two gripping members 30, which preferably are identical to each other, which grip a same metal product 70. The two gripping members 30 are arranged so as to form a clamp for the metal product 70, and in particular are opposite to each other.

Each pad 10 is fixed to the gripping member 30 by means of respective fixing means 39 (Fig. 1). The fixing means 39 allow disassembling the pad 10 to replace it with another pad 10. The fixing means 39 for example can be, or can comprise, bolts and/or fixing pins.

Each pad 10 is arranged at least partially at, for example above, a respective wall 31, 32 of the gripping member 30.

The pads 10 in particular are arranged so that the above-mentioned respective axes A are parallel or substantially parallel to each other, and parallel or substantially parallel to the longitudinal axis X of the metal product 70 when this latter is in contact with the two pads 10. Moreover, the respective axes B of the two pads 10 are mutually inclined, in particular in similar manner to the walls 31, 32 of the gripping member 30.

The aforesaid edge 21 for each pad 10 preferably is at a respective end edge of the gripping member 30 and, in particular, at a respective end edge of a respective wall 31, 32.

In particular, it is preferable for the edge 21 of each pad 10 to be flush with an end of the gripping member 30, i.e. each edge 21 preferably does not protrude nor is recessed with respect to the gripping member 30 along a direction which is parallel to the axis A.

With particular reference to Fig. 3, the gripping member 30 preferably comprises a system of cooling channels (or system of conduits) 41, 42, 43 comprising one or more channels. The channels of the channel system preferably are inside the gripping member 30. The channels 41, 42, 43 are, for example, holes made in the body of the gripping member 30. Part of such holes, for example an initial part, can conveniently be obstructed.

The system of channels 41, 42, 43 of the gripping member 30 preferably is in communication with the channels 12 of the two pads 10.

Gaskets 37 or sealing rings preferably are provided (Fig. 4) between the body of the gripping member 30 and the pad 10 to prevent the cooling fluid from leaking. The gaskets 37 in particular are at the areas in which the system of channels of the gripping member 30 communicates with the channels 12.

The system of channels 41, 42, 43 of the gripping member 30 preferably comprises (Fig. 3):

- a channel 41 for introducing the cooling fluid into the gripping member 30 and for conducting the cooling fluid into the channel 12 of a first pad 10 of the two pads fixed to the gripping member 30;
- a channel 42 for conducting the cooling fluid from the channel 12 of the first pad 10 to the channel 12 of a second pad 10 of said two pads;
- a channel 43 for conducting the cooling fluid from the channel 12 of the second pad 10 to the outside of the gripping member 30.

With reference also to Fig. 4, an example of a path of the cooling fluid - both through the gripping member 30 and through the two pads 10 - is indicated by the arrows. In particular, the cooling fluid:

enters the channel 41 and crosses it;
leaves the channel 41 and is introduced into the channel 12 of the first pad 10, and in particular the cooling fluid first crosses the stretch 122, then the stretch 121 and then the stretch 123;
leaves the channel 12 of said first pad, in particular by the stretch 123, and is introduced into the channel 42;
once the cooling fluid has crossed the channel 42, it leaves the latter and is introduced into the channel 12 of the second pad 10 (Fig. 3), and in particular the cooling fluid first crosses the stretch 122, then the stretch 121 and then the stretch 123 of the channel 12 of the second pad;
leaves the channel 12 of the second pad 10, is introduced into the channel 43 and leaves the latter to leave the gripping member 30.

Fig. 6 shows a welding apparatus 90 of metal products, in particular for welding an end of a first metal product 70 with an end of a second metal product 70'.

The welding apparatus 90 comprises a plurality of gripping members 30, and therefore a plurality of pads 10. There are provided at least two gripping members 30, for example two gripping members 30, for each product 70, 70'. The welding apparatus 90, for example, comprises four gripping members 30.

The welding apparatus 90 preferably is arranged upstream of a rolling mill. The welding apparatus 90 preferably is arranged between a continuous casting apparatus and a rolling mill (neither shown). The continuous casting apparatus, the welding apparatus 90 and the rolling mill preferably form part of a same plant. Such a plant preferably is configured to operate in endless mode.

A transport system of the metal products is also provided, for example a roller conveyor, depicted diagrammatically by the rollers 92. The transport system preferably is part of the rolling mill.

The roller conveyor can, for example, comprise a roller table and a self-propelled carriage (not shown), in which the welding means are accommodated. In any case, the welding means comprise the gripping members 30 and electrical power supplies 91. Each gripping member 30 is electrically connected to at least one electrical power supply 91. As mentioned above, at least one pair of mutually facing gripping members 30 preferably is provided for each metal product to be welded. In particular, the welding apparatus 90 shown comprises two pairs of gripping members 30. Each gripping member 30 is connected to a respective electrical power supply 91.

The carriage accompanies the product to be welded for a stretch of the roller table itself.

The elements conveyed, i.e. the metal products 70, 70', can be semi-finished metal products such as, for example, bars, billets or other products having similar shape, e.g. blooms.

Such metal products preferably, but not exclusively, directly come from a continuous casting apparatus or plant or from a preheating furnace, both of known type and not depicted in the drawings, and advance in the same direction along the axis X. The advancement speed of the two metal products 70, 70' is regulated so that the mutually facing ends thereof come into contact.

The welding or "flashing" is carried out under these conditions between the two ends of the metal products 70, 70'.

The electrical power supplies 91 in particular feed electric current to the metal product 70, 70' by means of the gripping members 30, and in particular through the pads 10 which grip the respective metal product 70, 70'.

The welding of the two metal products 70, 70' is obtained with the passage of electric current.

After the welding, the gripping members 30 are moved away from the welded metal product.

Due to the selection of the material with which the pads 10 of the gripping members 30 are made, the welding apparatus 90 can carry out a considerably greater number of welding operations, with respect to the state of the art, before the pads 10 require replacing.

## Claims

**1.** An electrical discharge welding apparatus (90) for welding metal products, comprising at least two gripping members (30), arranged so as to form a clamp for the metal products (70), capable of holding the metal products (70) in position during the welding, **characterized in that**

said at least two gripping members (30) comprise at least one pad (10) each,
the pad (10) being adapted to come into contact with a metal product (70) to be welded, the metal product defining a longitudinal axis (X),
the at least two gripping members (30) are each electrically connected to at least one electrical power supply (91) and are adapted to transmit electric current used for welding the metal products (70) by means of the passage of the electric current through the pads (10) to the metal products (70) to be welded,
and **in that** the pads (10) are made of a copper alloy comprising a percentage by weight of beryllium from 1.6 to 2.0 and have

an electrical conductivity lower than or equal to 40% IACS, and
a hardness greater than or equal to 20 HRC.

**2.** An apparatus according to claim 1, wherein the electrical conductivity is from 10 to 40% IACS, and the hardness is greater than or equal to 30 HRC, preferably from 20 to 60 HRC.

**3.** An apparatus according to claim 2, wherein the electrical conductivity is from 15 to 30% IACS, and the hardness is from 30 to 55 HRC.

**4.** An apparatus according to claim 3, wherein the electrical conductivity is from 20 to 24% IACS, and the hardness is from 35 to 45 HRC, preferably from 38 to 42 HRC.

**5.** An apparatus according to claim 1, wherein said copper alloy comprises a percentage by weight of cobalt from 0 to 0.3, preferably from 0.2 to 0.3.

**6.** An apparatus according to claim 5, wherein said copper alloy comprises a percentage by weight of nickel from 0 to 0.3, and preferably wherein the sum of the percentages by weight of cobalt and nickel is from 0.2 to 0.5.

**7.** An apparatus according to any one of the preceding claims, wherein said at least one pad (10) is provided with at least one inner channel (12) for the passage of a cooling fluid, preferably wherein said at least one inner channel (12) comprises at least one stretch (121) and wherein the minimum distance between said stretch (121) and an edge (21) of the pad (10) is from 4 to 10 mm, and preferably wherein said at least one stretch (121) substantially extends perpendicular to said longitudinal axis (X) when the metal product (70) is in contact with said pad (10).

8. An apparatus according to any one of the preceding claims, wherein said at least one gripping member (30) comprises two pads (10) fixed to said gripping member (30).

9. An apparatus according to claim 8, wherein said gripping member is provided with a system of inner channels (41, 42, 43) for the passage of a cooling fluid, said system of inner channels (41, 42, 43) of the gripping member (30) being in communication with an inner channel (12) of a first pad (10) of said two pads and with the inner channel (12) of a second pad (10) of said two pads.

10. An apparatus according to claim 9, wherein said system of inner channels (41, 42, 43) of the gripping member (30) comprises

    - a first channel (41) for introducing the cooling fluid into the gripping member (30) and for conducting the cooling fluid into the inner channel (12) of the first pad (10);
    - a second channel (42) for conducting the cooling fluid from the inner channel (12) of the first pad (10) to the inner channel (12) of the second pad (10);
    - a third channel (43) for conducting the cooling fluid from the inner channel (12) of the second pad (10) to the outside of the gripping member (30).

11. An apparatus according to claim 9, wherein each inner channel (12) comprises at least one stretch (121) and the minimum distance between said stretch (121) and an edge (21) of the pad (10) is from 4 to 10 mm, and preferably wherein said at least one stretch (121) substantially extends perpendicular to said longitudinal axis (X) when the metal product (70) is in contact with said pad (10).

12. A plant comprising a welding apparatus (90), according to any one of the preceding claims, and a rolling apparatus.


**Patentansprüche**

1. Elektrische Entladungsschweißvorrichtung (90) zum Schweißen von Metallprodukten, die mindestens zwei Greifelemente (30) umfasst, die so angeordnet sind, dass sie eine Klemme für die Metallprodukte (70) bilden, die in der Lage ist, die Metallprodukte (70) während des Schweißens in Position zu halten, **dadurch gekennzeichnet, dass**

die mindestens zwei Greifelemente (30) jeweils mindestens einen Belag (10) umfassen,
wobei der Belag (10) dazu geeignet ist, mit dem zu schweißenden Metallprodukt (70) in Kontakt zu treten, wobei das Metallprodukt eine Längsachse (X) definiert,
die mindestens zwei Greifelemente (30) jeweils elektrisch
mit mindestens einer elektrischen Stromversorgung (91) verbunden und dazu geeignet sind, elektrischen Strom zu übertragen, der
zum Schweißen der Metallprodukte (70) mittels des Durchgangs des elektrischen Stroms durch die Beläge (10) auf die zu schweißenden Metallprodukte (70) verwendet wird,
und dadurch, dass die Beläge (10) aus einer Kupferlegierung bestehen, die einen Anteil an Beryllium von 1,6 bis 2,0 Gewichtsprozent umfasst, und
eine elektrische Leitfähigkeit von weniger als oder gleich 40 % IACS und
eine Härte von mehr als oder gleich 20 HRC aufweisen.

2. Vorrichtung nach Anspruch 1, wobei die elektrische Leitfähigkeit 10 bis 40 % IACS beträgt und die Härte mehr als oder gleich 30 HRC, vorzugsweise 20 bis 60 HRC, beträgt.

3. Vorrichtung nach Anspruch 2, wobei die elektrische Leitfähigkeit 15 bis 30 % IACS beträgt und die Härte 30 bis 55 HRC beträgt.

4. Vorrichtung nach Anspruch 3, wobei die elektrische Leitfähigkeit 20 bis 24 % IACS beträgt und die Härte 35 bis 45 HRC, vorzugsweise 38 bis 42 HRC, beträgt.

5. Vorrichtung nach Anspruch 1, wobei die Kupferlegierung einen Anteil an Kobalt von 0 bis 0,3, vorzugsweise von 0,2 bis 0,3, Gewichtsprozent umfasst.

6. Vorrichtung nach Anspruch 5, wobei die Kupferlegierung einen Anteil an Nickel von 0 bis 0,3 Gewichtsprozent umfasst, und wobei die Summe der Gewichtsprozentanteile von Kobalt und Nickel vorzugsweise 0,2 bis 0,5 beträgt.

7. Vorrichtung nach einem der vorhergehenden Ansprüche, wobei der mindestens eine Belag (10) mit mindestens einem inneren Kanal (12) für den Durchgang eines Kühlfluids versehen ist, wobei der mindestens eine innere Kanal (12) vorzugsweise mindestens einen Abschnitt (121) umfasst und wobei der Mindestabstand zwischen dem Abschnitt (121) und einer Kante (21) des Belags (10) 4 bis 10 mm beträgt, und wobei sich der mindestens eine Abschnitt (121) vorzugsweise im Wesentlichen senkrecht zu der Längsachse (X) erstreckt, wenn das Metallprodukt (70) in Kontakt mit dem Belag (10) steht.

8. Vorrichtung nach einem der vorhergehenden Ansprüche, wobei das mindestens eine Greifelement (30) zwei Beläge (10) umfasst, die an dem Greifelement (30) befestigt sind.

9. Vorrichtung nach Anspruch 8, wobei das Greifelement mit einem System von inneren Kanälen (41, 42, 43) für den Durchgang eines Kühlfluids versehen ist, wobei das System von inneren Kanälen (41, 42, 43) des Greifelements (30) in Verbindung mit einem inneren Kanal (12) eines ersten Belags (10) der beiden Beläge und mit dem inneren Kanal (12) eines zweiten Belags (10) der beiden Beläge steht.

10. Vorrichtung nach Anspruch 9, wobei das System von inneren Kanälen (41, 42, 43) des Greifelements (30) umfasst

 - einen ersten Kanal (41) zum Einführen von Kühlfluid in das Greifelement (30) und zum Leiten des Kühlfluids in den inneren Kanal (12) des ersten Belags (10);
 - einen zweiten Kanal (42) zum Leiten des Kühlfluids von dem inneren Kanal (12) des ersten Belags (10) zu dem inneren Kanal (12) des zweiten Belags (10);
 - einen dritten Kanal (43) zum Leiten des Kühlfluids von dem inneren Kanal (12) des zweiten Belags (10) zu der Außenseite des Greifelements (30).

11. Vorrichtung nach Anspruch 9, wobei der innere Kanal (12) mindestens einen Abschnitt (121) umfasst und der Mindestabstand zwischen dem Abschnitt (121) und einer Kante (21) des Belags (10) 4 bis 10 mm beträgt, und wobei sich der mindestens eine Abschnitt (121) vorzugsweise im Wesentlichen senkrecht zu der Längsachse (X) erstreckt, wenn das Metallprodukt (70) in Kontakt mit dem Belag (10) steht.

12. Anlage, die eine Schweißvorrichtung (90) nach einem der vorhergehenden Ansprüche und eine Walzvorrichtung umfasst.

**Revendications**

1. Appareil de soudage par décharge électrique (90) pour souder des produits métalliques, comprenant au moins deux éléments de préhension (30), disposés de manière à former une pince pour les produits métalliques (70), capable de maintenir les produits métalliques (70) en position pendant le soudage, **caractérisé en ce que**

lesdits au moins deux éléments de préhension (30) comprennent au moins un patin (10) chacun,
le patin (10) étant adapté pour venir en contact avec un produit métallique (70) à souder, le produit métallique définissant un axe longitudinal (X),
les au moins deux éléments de préhension (30) sont chacun électriquement reliés à au moins une source d'alimentation électrique (91) et sont adaptés pour transmettre le courant électrique utilisé
pour souder les produits métalliques (70) au moyen du passage du courant électrique à travers les patins (10) aux produits métalliques (70) à souder,
et **en ce que** les patins (10) sont
fait d'un alliage de cuivre comprenant un pourcentage en poids de béryllium de 1,6 à 2,0 et possèdent
une conductivité électrique inférieure ou égale à 40 % IACS, et
une dureté supérieure ou égale à 20 HRC.

2. Appareil selon la revendication 1, dans lequel la conductivité électrique est de 10 à 40 % IACS, et la dureté est supérieure ou égale à 30 HRC, de préférence de 20 à 60 HRC.

3. Appareil selon la revendication 2, dans lequel la conductivité électrique est de 15 à 30 % IACS, et la dureté est de 30 à 55 HRC.

4. Appareil selon la revendication 3, dans lequel la conductivité électrique est de 20 à 24 % IACS, et la dureté est de 35 à 45 HRC, de préférence de 38 à 42 HRC.

5. Appareil selon la revendication 1, dans lequel ledit alliage de cuivre comprend un pourcentage en poids de cobalt de 0 à 0,3, de préférence de 0,2 à 0,3.

6. Appareil selon la revendication 5, dans lequel ledit alliage de cuivre comprend un pourcentage en poids de nickel de 0 à 0,3, et de préférence dans lequel la somme des pourcentages en poids de cobalt et de nickel est de 0,2 à 0,5.

7. Appareil selon l'une quelconque des revendications précédentes, dans lequel ledit au moins un patin (10) est pourvu d'au moins un canal interne (12) pour le passage d'un fluide de refroidissement, de préférence dans lequel ledit au moins un canal interne (12) comprend au moins un tronçon (121) et dans lequel la distance minimale entre ledit tronçon (121) et un bord (21) du patin (10) est de 4 à 10 mm, et de préférence dans lequel ledit au moins un tronçon (121) s'étend sensiblement perpendiculairement audit axe longitudinal (X) lorsque le produit métallique (70) est en contact avec ledit patin (10).

8. Appareil selon l'une quelconque des revendications précédentes, dans lequel ledit au moins un élément de préhension (30) comprend deux patins (10) fixés audit élément de préhension (30).

9. Appareil selon la revendication 8, dans lequel ledit élément de préhension est pourvu d'un système de canaux internes (41, 42, 43) pour le passage d'un fluide de refroidissement, ledit système de canaux internes (41, 42, 43) de l'élément de préhension (30) étant en communication avec un canal interne (12) d'un premier patin (10) desdits deux patins et avec le canal interne (12) d'un deuxième patin (10) desdits deux patins.

10. Appareil selon la revendication 9, dans lequel ledit système de canaux internes (41, 42, 43) de l'élément de préhension (30) comprend

   - un premier canal (41) pour introduire le fluide de refroidissement dans l'élément de préhension (30) et pour conduire le fluide de refroidissement dans le canal interne (12) du premier patin (10) ;
   - un deuxième canal (42) pour conduire le fluide de refroidissement du canal interne (12) du premier patin (10) au canal interne (12) du deuxième patin (10) ;
   - un troisième canal (43) pour conduire le fluide de refroidissement du canal interne (12) du deuxième patin (10) vers l'extérieur de l'élément de préhension (30).

11. Appareil selon la revendication 9, dans lequel chaque canal interne (12) comprend au moins un tronçon (121) et la distance minimale entre ledit tronçon (121) et un bord (21) du patin (10) est de 4 à 10 mm, et de préférence dans lequel ledit au moins un tronçon (121) s'étend sensiblement perpendiculairement audit axe longitudinal (X) lorsque le produit métallique (70) est en contact avec ledit patin (10).

12. Installation comprenant un appareil de soudage (90), selon l'une quelconque des revendications précédentes, et un appareil de laminage.

Fig. 1

Fig. 2

Fig. 3

Fig. 4

Fig. 5

Fig. 6

**EP 3 877 113 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001017290 A1

- US 2142671 A